# EUROPEAN PATENT SPECIFICATION

(11) **EP 4 044 885 B1**
(45) Date of publication and mention of the grant of the patent: **02.08.2023**
(21) Application number: 20807497.1
(22) Date of filing: 19.10.2020
(51) Int. Cl.: A47J 42/40, A47J 42/42

(54) **COFFEE GRINDER WITH DEVICE FOR FILTER HOLDER OR FILTER DETECTION AND METHOD FOR DETECTING A FILTER HOLDER OR FILTER**
KAFFEEMÜHLE MIT VORRICHTUNG ZUR FILTERHALTERUNG ODER FILTERDETEKTION UND VERFAHREN ZUR DETEKTION EINES FILTERHALTERS ODER FILTERS
MOULIN À CAFÉ DOTÉ D'UN DISPOSITIF DE DÉTECTION DE PORTE-FILTRE OU DE FILTRE ET PROCÉDÉ DE DÉTECTION DE PORTE-FILTRE OU DE FILTRE

(30) Priority: 18.10.2019 IT 201900019349
(43) Date of publication of application: 24.08.2022
(73) Proprietor: La Marzocco S.r.l., 50038 Scarperia (FI) (IT)
(72) Inventor: DIONISIO, Andrea, 50038 Scarperia (FI) (IT)
(74) Representative: Colombo, Stefano Paolo
(86) International application number: PCT/IB2020/059819
(87) International publication number: WO 2021/074908

(56) References cited:
- EP-A1- 2 314 188
- EP-A1- 2 892 403
- AU-B2- 2012 268 779

## Description

### BACKGROUND

The present invention relates to the field of espresso coffee making machines and to machines for grinding coffee grains. Such a coffee grain grinding machine may be a separate machine or may be integrated into a coffee beverage making machine. Such a machine for grinding coffee grains is also known simply as "coffee grinder machine", "coffee grinder" or "grinder".

More particularly, the present invention relates to a device for detecting when a filter and/or a filter holder is present in a predetermined position of a coffee grinder machine or an espresso coffee making machine.

### STATE OF THE ART

As is known, for the preparation of an espresso coffee, a certain amount of ground coffee, usually called dose, is used. The dose of ground coffee is loaded into a filter, which is typically cup-shaped, open at the top and with a micro-perforated bottom. Typically, the coffee dose is pressed into the filter to form a powdered coffee puck. The filter is in turn supported by a filter holder configured to removably engage a dispensing group of an espresso coffee machine. The espresso coffee is obtained by passing hot water under pressure through the powdered coffee puck.

The coffee powder is obtained by a coffee grinder machine. In a known coffee grinder machine, the coffee grains are ground by passing them through grinding members. Grinding members of the flat, conical or cylindrical type are known. Typically, the grinding members of a coffee grinding machine comprise a fixed member and a member which rotates with respect to the fixed member. For example, in a coffee grinder with conical grinders, one grinder remains fixed, namely stationary, while the other is rotated by a motor.

Downstream of the grinding means, the filter holder is arranged so that the ground coffee collects in the filter retained by the filter holder.

Supports for the filter holder are known. These supports constitute a support for the filter holder during the coffee grinding and the loading of the ground coffee into the filter.

Some coffee grinding machines are able to detect the presence of the filter holder when resting on the support.

For example, coffee grinding machines are known in which the detection takes place using a mechanical microswitch, an inductive sensor or a device corresponding to the weight (or mass) of the filter holder, for example a device comprising a load cell or the like.

Detection of the presence of the filter holder in place may be desirable or necessary for a plurality of reasons.

For example, detection of the filter holder can be used to start grinding the coffee grains automatically, without pressing a start key in the coffee grinder.

In addition or alternatively, the detection of the filter holder can be used to prevent the inadvertent start of the grinding if the key is pressed without the filter holder resting.

In addition or alternatively, the detection of the filter holder can be used to stop the grinding automatically as soon as the filter holder is removed.

AU 2012 268 779 B2 discloses a dispensing appliance for dispensing coffee grinds into a filter assembly comprising: a body; a cradle for receiving the filter assembly, wherein the cradle is moveable relative to the body between a first and second position; a dispensing assembly for dispensing coffee grinds to the filter assembly, wherein the dispensing assembly is operable to dispense coffee grinds by moving the cradle to the second position.

EP 2 892 403 A1 discloses a super-automatic coffee maker for preparation of espresso coffee.

EP 2 314 188 A1 discloses an apparatus and a method for refilling the filter-holders of an espresso coffee machine with selected doses of ground coffee to order.

### SUMMARY OF THE INVENTION

The Applicant has carefully observed the known devices for detecting the filter holder in coffee grinder machines or the like.

According to the Applicant, a filter holder detection system of the above type has the intrinsic limit of using a delicate component which is at high risk of breakage. In fact, the microswitches, the inductive sensors or the load cells of a sensing system based on the weight of the filter holder are delicate components.

In addition, the conditions under which they operate are critical and not optimal for at least the following reasons. The environment is dirty with coffee powder. Moreover, a coffee grinding machine is frequently subjected to washing with water or detergents by personnel who are not very respectful of the machine and in any case forced to work quickly. The bartender operates at great speed in confined spaces and often collides, unintentionally and also abruptly, with the support and/or the sensor.

According to the Applicant, the inductive sensor is advantageous in that it is contact-free but has a rather reduced reading range. Moreover, according to the Applicant, the steel filter holders are detected worse than the brass filter holders. In any case, the inductive sensor is sensitive to dirt and is also expensive.

If the presence of the filter holder is not detected or is detected in an unreliable manner, grinding may not occur or may not stop at the set time or start when not necessary. All of these situations are a hindrance to the work of the bartender and therefore affect the work of the bartender. Furthermore, in the event that the dose does not stop at the desired time or in the case where the grinding starts when not desired, the ground coffee would be wasted.

The Applicant has therefore set itself the objective of providing a reliable and robust system for detecting the presence of a filter or a filter holder in a coffee grinding machine. The device of the invention can also be used in a machine other than a coffee grinding machine. For example, it can be used in a machine for weighing the coffee dose (contained in the filter) or in a machine for pressing the ground coffee. For the purposes of the present invention, the expression "machine" or "coffee machine" (or similar expressions) will also mean an espresso coffee machine, a coffee weighing machine or a coffee pressing machine.

According to the Applicant, the above object can be obtained by providing a normally open switch comprising a first electrical contact and a second electrical contact, wherein said first electrical contact and said second electrical contact are configured to support the filter and/or the filter holder so as to close the switch by means of an electrical contact between said contacts and said filter and/or filter holder.

According to a first aspect, there is provided a coffee grinding machine comprising:
a machine body with a motor and grinding members for grinding coffee grains; and a device for detecting the presence of a filter and/or a filter holder in a predetermined position suitable for receiving ground coffee,
wherein the detection device comprises a normally open switch comprising a first half-support for the filter and/or filter holder and a second half-support for the filter and/or filter holder, and
wherein the switch is configured to close when the filter and/or filter holder is in electrical contact with the first half-support and with the second half-support.

According to embodiments, when said switch is open, at least one functionality of the coffee grinder is inhibited.

According to embodiments, when said switch is open the motor is not powered.

According to embodiments, the first half-support and the second half-support are separated by a slot and comprise a bight for the body of the filter holder.

According to embodiments, the first half-support and the second half-support define a support plane.

According to embodiments, the first half-support and the second half-support are configured to engage the filter holder at the fins projecting from the body of the filter holder.

According to embodiments, the first half-support and the second half-support are connected to a board by means of respective cables.

According to embodiments, the machine also comprises a further handle support for supporting the handle of the filter holder.

According to embodiments, the machine further comprises hooks cooperating with the half-supports to hold the filter and/or the filter holder in a predetermined position.

According to embodiments, the hooks are substantially inverted L-shaped.

According to embodiments, the hooks are at least partially of an electrically conductive material.

According to another aspect, the present invention provides a method for detecting the presence of a filter and/or a filter holder when it is in a set position in a coffee grinding machine or in an espresso coffee making machine or in a machine for weighing a dose of coffee or in a machine for pressing a dose of coffee into a filter holder, comprising: providing a filter or filter-holder detection device comprising a normally open switch comprising a first half-support for the filter or filter-holder and a second half-support for the filter or filter-holder, and closing the switch by creating an electrical contact between said filter and/or filter holder, said first support and said second support.

According to embodiments, when the switch is open, at least one function of the coffee grinder machine is inhibited.

According to embodiments, when the switch is open, the motor is not powered.

According to embodiments, a time threshold is provided between the time in which the circuit is closed by the filter and/or the filter holder and the time in which the functionality of the coffee grinder is inhibited.

### BRIEF DESCRIPTION OF THE DRAWINGS

A detailed description of the invention is now given by way of nonlimiting example, to be read with reference to the accompanying figures, in which:
- Fig. 1 is a schematic representation of a coffee grinder machine with filter holder detection device according to an embodiment of the invention;
- Fig. 2 is a representation similar to Fig. 1 in which electrical connections are also shown;
- Fig. 3 is an enlarged representation of a part of the machine of Fig. 1;
- Fig. 4 is a representation of the electrical diagram of a device for detecting the filter holder;
- Fig. 5.1 shows schematically a filter holder before contacting two supports of a filter holder detection device;
- Fig. 5.2 shows schematically a filter holder in contact with the two supports;
- Fig. 6A is a partial schematic representation of a coffee grinder machine with filter and/or filter holder detection device according to a second embodiment of the invention;
- Fig. 6B is a side view of the machine of Fig. 6A;
- Fig. 7 shows the machine of Fig. 6A with a filter holder which is supported cantilever;
- Fig. 8A is an axonometric view of the machine of Fig. 6A with a filter on the support; and
- Fig. 8B is a front view of the machine of Fig. 6A with a filter on the support.

### DETAILED DESCRIPTION

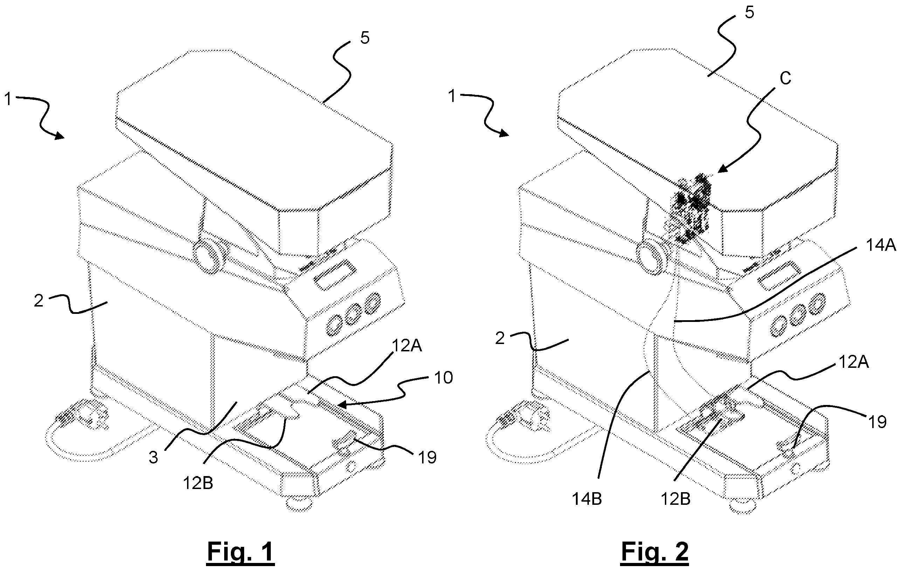

In Figure 1, by way of example only, a coffee grinding machine 1 is shown with a device 10 for detecting the presence of the filter holder 20 in a correct position.

The coffee grinding machine 1 comprises a machine body 2 which encloses the main components, including a motor and grinding members, not shown. A hopper 5 for containing coffee beans to be grinded is mounted on the upper part.

In the lower part there is a zone 3 for the filter holder 20. During grinding, the filter holder 20 must be in a correct position so that the ground coffee collects in the filter 23.

According to a first embodiment of the present invention, the device 10 for detecting the filter holder comprises a normally open switch which is closed by means of an electrical connection between the filter holder 20 and two electrically conductive contacts 12A, 12B. According to the present invention, the two electrically conductive contacts 12A, 12B are configured to support the filter holder 20. Preferably, the two electrically conductive contacts 12A, 12B support the filter holder 20 at the body 22 of the filter holder 20 which is made of at least partially metallic material, such as steel, aluminum, brass or alloys thereof.

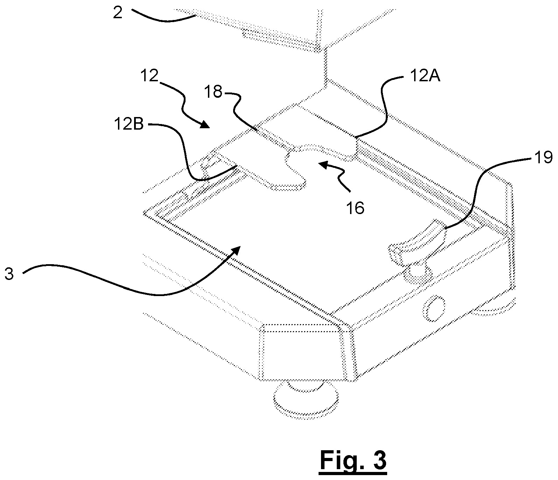

According to the embodiment of Figures 1-3, the two electrically conductive contacts 12A, 12B are configured to support the body 22 of the filter holder.

According to alternative embodiments, the two electrically conductive contacts 12A, 12B are configured to support the body 22 of the filter holder at the fins 221 which serve to lock the filter holder to a dispensing assembly of an espresso coffee machine.

With reference to Figures 1-3, according to an embodiment of the present invention, the filter holder detecting device 10 comprises a support 12 in turn comprising two half supports 12A, 12B. Each of the half-supports 12A, 12B is at least partially made of an electrically conductive material and is electrically insulated from the other half-support. As can be seen in Figures 1-3, for example the two half-supports 12A, 12B are separated by an empty space 18 and form a support plane with a substantially semicircular front bight 18. Of course, the supports 12A, 12B could be shaped differently without departing from the scope of the present invention.

Each half-support 12A, 12B is electrically connected to a control unit C, for example by means of an electric wire 14A, 14B.

In the absence of the filter holder, the corresponding electrical circuit is open and this inhibits at least one functionality of the coffee grinder 1. For example, it inhibits the feeding of a motor M which, by acting on one or more of the grinding members, performs the grinding of the coffee grains. Therefore, in the absence of the filter holder in position, the motor M is not supplied and cannot operate.

When the filter holder 20 is in a correct position, since its body 22 is at least partially made of metal, it closes the circuit and makes possible the otherwise prevented functionality. For example, it makes it possible to operate the motor M by means of a start key or even possibly without pressing any key. In the latter case, the motor M is configured to start immediately upon contact between the (metallic) body of the filter holder and the two half-supports.

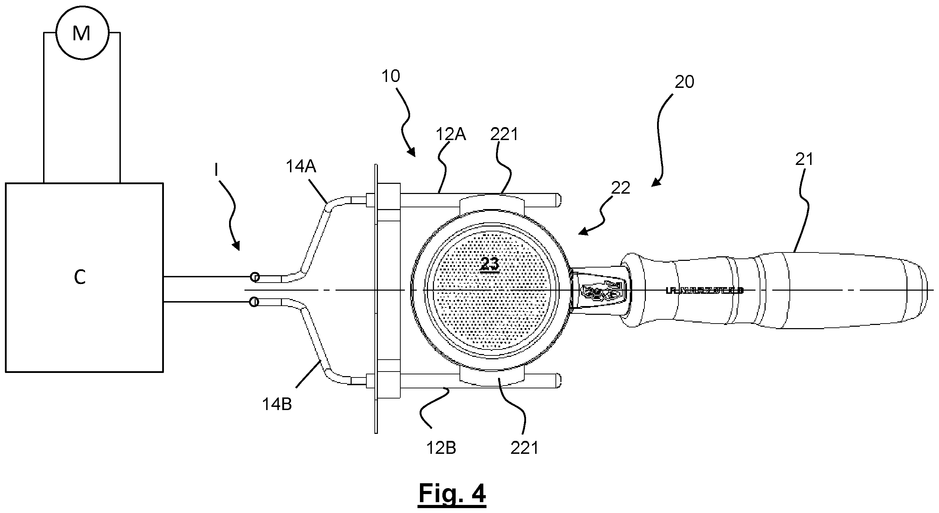

Fig. 4 schematically shows the circuit of the switch I closed by means of the body 22 of the filter holder 20. Fig. 4 also shows the control unit C and the motor M which drives one or more of the grinding members.

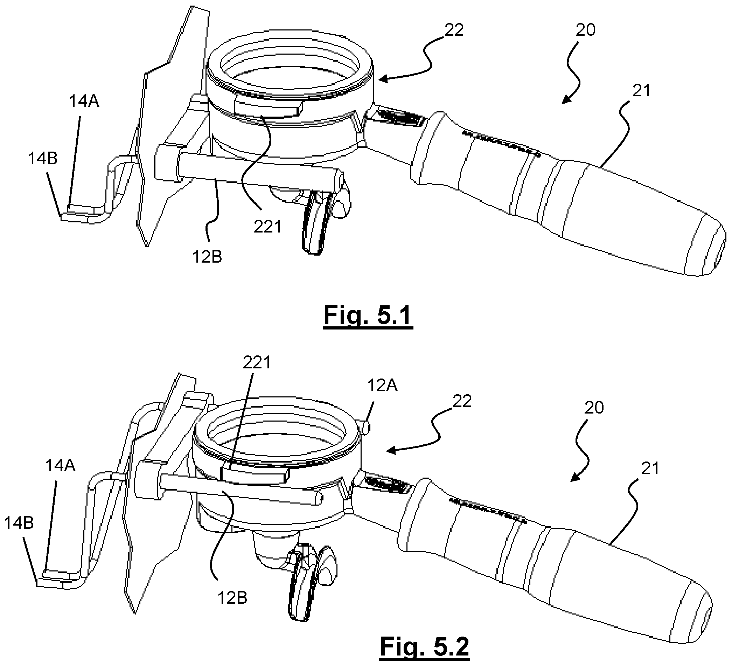

Of course, the half-supports 12A, 12B of the device of the invention may have a shape different from that shown in Figures 1-3. For example, each could have a cylindrical bar shape, as shown in Figures 4, 5.1 and 5.2.

More particularly, Fig. 5.1 schematically shows a filter holder 20 before coming into contact with the two half-supports 12A, 12B and Fig. 5.2 schematically shows a filter holder 20 in contact with the two half-supports 12A, 12B.

In addition to the supports of the body 22 of the filter holder 20, a further support 19 may also be provided to support the filter holder 20 in correspondence of at least another point. As shown in Figures 1-3, the further support could be a Y-shaped handle support 21 for receiving the handle 21 of a filter holder 20. In embodiments, the height of the further support 19 is adjustable to accommodate handles of different shapes and/or diameters. Height adjustment may be via a screw system.

According to embodiments, a time threshold is provided between the time in which the circuit is closed by the filter holder and the time in which, for example, the motor of a coffee grinding machine starts and possibly stops. This is to avoid the situation in which the bartender rests the filter holder on the support but immediately after he inadvertently lifts it from the support.

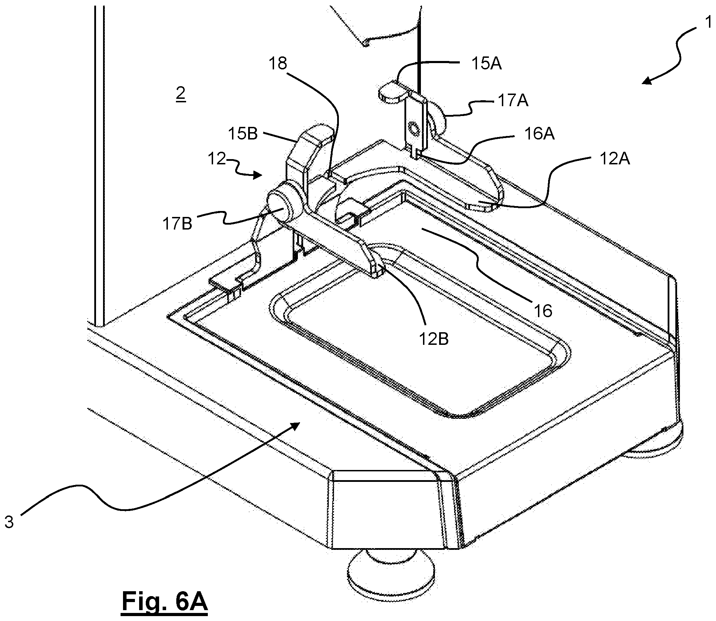

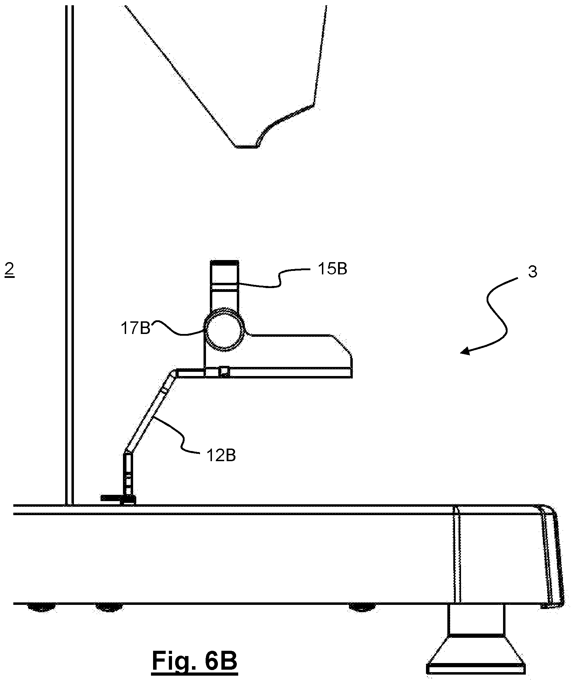

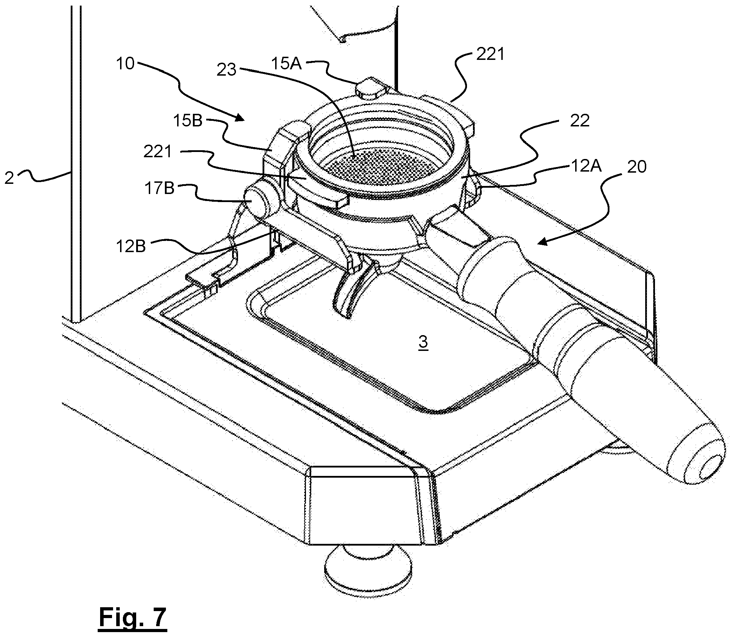

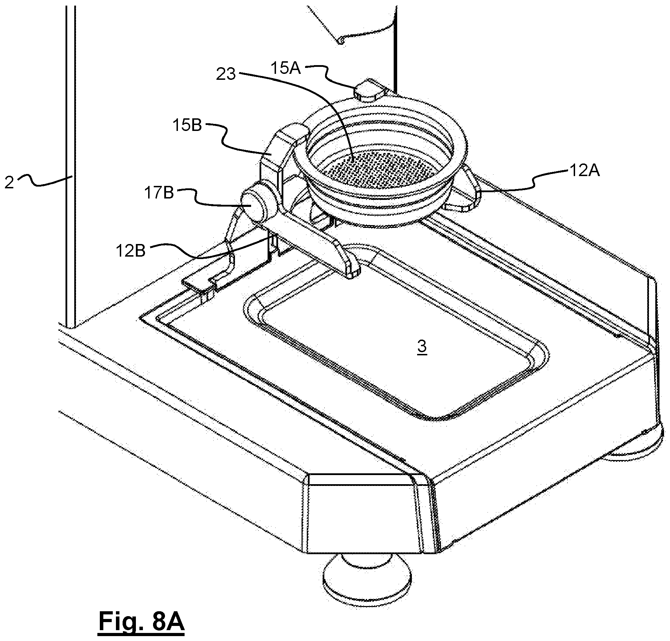

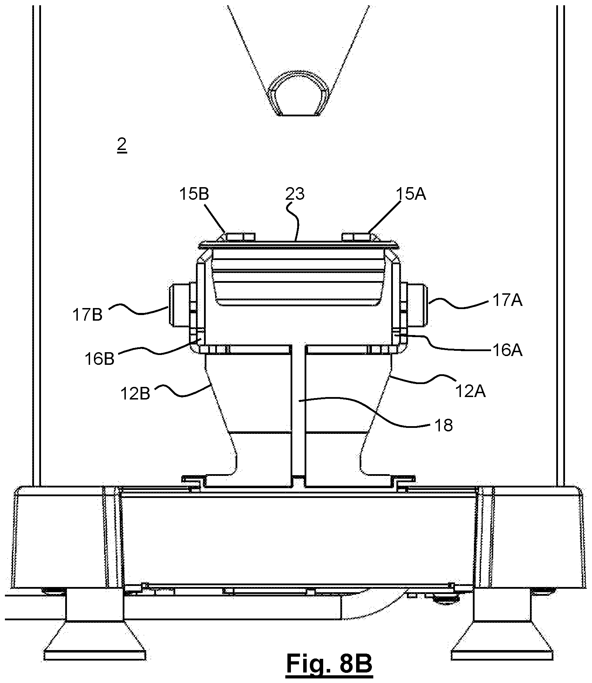

In Figures 6A, 6B, 7, 8A and 8B another embodiment of the present invention is shown. According to this embodiment, each half-holder 12A and 12B comprises holding hooks 15A and 15B for holding a filter holder 20 and/or a filter 23. The filter 23 can be held by the hooks 15A and 15B when it is housed in the body 22 of the filter holder 20 or, alternatively, it can be held directly (Figures 8A and 8B).

Each hook 15A and 15B is, for example, shaped like an inverted L and the two hooks face each other to form a sort of bridge, interrupted centrally.

According to an embodiment, the half-supports 12A and 12B have an angular profile. Each hook 15A and 15B is integral with a half-support or is fixed to a half-support. The fixing can be done, for example, by welding, with screws or other known system.

As shown for example in Fig. 6A, according to an embodiment, each hook 15A and 15B comprises a thinner lower leg 16A, 16B which engages a hole in the half-support 12A and 12B. The half-support and the hook 15A and 15B are locked together with a screw with a head that can be rotated by two fingers of a hand. In this way, the two hooks can be easily assembled and disassembled.

The half-supports 12A and 12B and the hooks are, at least partially, in an electrically conductive material. The electrical circuit described in relation to the first embodiment is closed when it is present
(a) a filter holder made of metal or other electrically conductive material and a filter; or
(b) a non-electrically conductive filter holder and a filter made of metal or any other electrically conductive material; or
(c) a filter made of metal or made of other electrically conductive material.

In other words, the circuit is closed by the filter holder and/or by the filter.

This embodiment results in several advantages. First, it is possible to use a filter holder made of a non-metallic material because the electrical contact is ensured by the filter. Secondly, it is possible not to use a filter holder at all. Thirdly, the filter holder and/or filter is prevented from tipping over. Fourthly, since the filter holder and/or the filter are not resting in correspondence with other support points, it is easier to weigh them.

## Claims

1. A coffee grinder machine (1) comprising:
a machine body (2) with a motor and grinding members for grinding coffee beans; and a device (10) for detecting the presence of a filter (23) and/or a filter holder (20) in a set position suitable for receiving ground coffee,
wherein the detecting device (10) comprises a normally-open switch (I) comprising a first half-support (12A) for the filter (23) and/or the filter holder (20) and a second half-support (12B) for the filter and/or filter holder (20),
**characterized in that** the switch (I) is configured to close when the filter and/or filter holder (20) is in electrical contact with the first half-support (12A) and with the second half-support (12B).

2. The machine (1) of claim 1, wherein when the switch (I) is open, at least one function of the coffee grinder machine is inhibited.

3. The machine (1) of claim 2, wherein when the switch (I) is open said motor is not powered.

4. The machine (1) of any one of the preceding claims, wherein the first half-support (12A) and the second half-support (12B) are separated by a slot (18) and comprise a bight (16) for the body (21) of the filter holder (20).

5. The machine (1) of claim 4, wherein the first half-support (12A) and the second half-support (12B) define a supporting plane.

6. The machine (1) of any one of claims 1-3, wherein the first half-support (12A) and the second half-support (12B) are configured to engage the filter holder (20) in correspondence with the fins (221) projecting from the body (22) of the filter holder (20).

7. The machine (1) of any one of the previous claims, wherein the first half-support (12A) and the second half-support (12B) are connected to a board (C) through respective cables (14A, 14B).

8. The machine (1) of any one of the preceding claims, further comprising a further handle support (19) for supporting the handle (21) of the filter holder (20).

9. The machine (1) of any one of the preceding claims, further comprising hooks (15A, 15B) cooperating with the half-supports (12A, 12B) to hold the filter (23) and/or the filter holder (20) in a predetermined position .

10. The machine of claim 9, wherein said hooks (15A, 15B) are substantially inverted L-shaped.

11. The machine of claim 9 or 10, wherein said hooks (15A, 15B) are at least partially of an electrically conductive material.

12. A method of detecting the presence of a filter (23) or a filter holder (20) when it is in a set position in a coffee grinder machine or in a machine for preparing espresso coffee or in a machine for weighing a dose of coffee or in a machine for pressing a dose of ground coffee in a filter holder, comprising: providing a device (10) for detecting a filter (23) or a filter holder (20) comprising a normally open switch (I) comprising a first half-support (12A) for the filter (23) and/or the filter holder (20) and a second half-support (12B) for the filter (23) and/or filter holder (20), **characterized by** closing the switch (I) by creating an electrical contact between said filter (23) and/or filter holder (20), said first half-support (12A) and said second half-support (12B).

13. The method of claim 12, wherein when the switch (I) is open, at least one function of the coffee grinder machine is inhibited.

14. The method of claim 13, in which when the switch (I) is open the motor is not powered.

15. The method of claim 13 or 14, in which a time threshold is provided between the time in which the circuit is closed by the filter and/or filter holder and the time in which the functionality of the coffee grinder machine is inhibited.

## Patentansprüche

1. Kaffeemahlmaschine (1) mit:
einem Maschinenkörper (2) mit einem Motor und Mahlelementen zum Mahlen von Kaffeebohnen; und einer Vorrichtung (10) zum Erkennen des Vorhandenseins eines Filters (23) und/oder eines Filterhalters (20) in einer bestimmten Position, die zur Aufnahme von gemahlenem Kaffee geeignet ist,
wobei die Erfassungsvorrichtung (10) einen normalerweise offenen Schalter (I) aufweist, der eine erste Halbstütze (12A) für das Filter (23) und/oder den Filterhalter (20) und eine zweite Halbstütze (12B) für das Filter und/oder den Filterhalter (20) aufweist,
**dadurch gekennzeichnet,**
**dass** der Schalter (I) ausgestaltet ist, um sich zu schließen, wenn das Filter und/oder der Filterhalter (20) in elektrischem Kontakt mit der ersten Halbstütze (12A) und mit der zweiten Halbstütze (12B) steht.

2. Maschine (1) nach Anspruch 1, wobei, wenn der Schalter (I) offen ist, mindestens eine Funktion der Kaffeemahlmaschine blockiert ist.

3. Maschine (1) nach Anspruch 2, wobei der Motor nicht angetrieben ist, wenn der Schalter (I) offen ist.

4. Maschine (1) nach einem der vorhergehenden Ansprüche, wobei die erste Halbstütze (12A) und die zweite Halbstütze (12B) durch einen Schlitz (18) getrennt sind und eine Einbuchtung (16) für den Körper (21) des Filterhalters (20) aufweisen.

5. Maschine (1) nach Anspruch 4, wobei die erste Halbstütze (12A) und die zweite Halbstütze (12B) eine Stützebene definieren.

6. Maschine (1) nach einem der Ansprüche 1 bis 3, wobei die erste Halbstütze (12A) und die zweite Halbstütze (12B) ausgestaltet sind, um mit dem Filterhalter (20) in Übereinstimmung mit den Rippen (221), die aus dem Körper (22) des Filterhalters (20) herausragen, in Eingriff zu kommen.

7. Maschine (1) nach einem der vorhergehenden Ansprüche, wobei die erste Halbstütze (12A) und die zweite Halbstütze (12B) über entsprechende Kabel (14A, 14B) mit einer Platine (C) verbunden sind.

8. Maschine (1) nach einem der vorhergehenden Ansprüche, die ferner eine weitere Griffstütze (19) zum Stützen des Griffs (21) des Filterhalters (20) aufweist.

9. Maschine (1) nach einem der vorhergehenden Ansprüche, die ferner Haken (15A, 15B) aufweist, die mit den Halbstützen (12A, 12B) zusammenwirken, um das Filter (23) und/oder den Filterhalter (20) in einer vorgegebenen Position zu halten.

10. Maschine nach Anspruch 9, wobei die Haken (15A, 15B) im Wesentlichen umgekehrt L-förmig sind.

11. Maschine nach Anspruch 9 oder 10, bei der die Haken (15A, 15B) zumindest teilweise aus einem elektrisch leitenden Material bestehen.

12. Verfahren zum Erfassen des Vorhandenseins eines Filters (23) oder eines Filterhalters (20), wenn sich dieser in einer bestimmten Position in einer Kaffeemahlmaschine oder in einer Maschine zur Zubereitung von Espresso-Kaffee oder in einer Maschine zum Wiegen einer Kaffeedosierung oder in einer Maschine zum Pressen einer Dosierung gemahlenen Kaffees in einem Filterhalter befindet, wobei es aufweist: Bereitstellen einer Vorrichtung (10) zum Erfassen eines Filters (23) oder eines Filterhalters (20) mit einem normalerweise offenen Schalter (I), der eine erste Halbstütze (12A) für das Filter (23) und/oder den Filterhalter (20) und eine zweite Halbstütze (12B) für das Filter (23) und/oder den Filterhalter (20) aufweist, **gekennzeichnet durch** Schließen des Schalters (I), um einen elektrischen Kontakt zwischen dem Filter (23) und/oder dem Filterhalter (20), der ersten Halbstütze (12A) und der zweiten Halbstütze (12B) zu erzeugen.

13. Verfahren nach Anspruch 12, wobei, wenn der Schalter (I) geöffnet ist, mindestens eine Funktion der Kaffeemahlmaschine blockiert ist.

14. Verfahren nach Anspruch 13, bei dem der Motor nicht angetrieben wird, wenn der Schalter (I) geöffnet ist.

15. Verfahren nach Anspruch 13 oder 14, bei dem eine Zeitschwelle vorgesehen ist zwischen der Zeit, in der der Stromkreis durch das Filter und/oder den Filterhalter geschlossen ist, und der Zeit, in der die Funktion der Kaffeemahlmaschine blockiert ist.

## Revendications

1. Machine de moulin à café (1) comprenant :
un corps de machine (2) avec un moteur et des éléments de mouture pour moudre des grains de café ; et un dispositif (10) pour détecter la présence d'un filtre (23) et/ou d'un porte-filtre (20) à une position définie adaptée pour recevoir du café moulu,
dans laquelle le dispositif de détection (10) comprend un commutateur normalement ouvert (I) comprenant un premier demi-support (12A) pour le filtre (23) et/ou le porte-filtre (20) et un deuxième demi-support (12B) pour le filtre et/ou le porte-filtre (20),
**caractérisé en ce que** le commutateur (I) est configuré pour se fermer lorsque le filtre et/ou le porte-filtre (20) est en contact électrique avec le premier demi-support (12A) et avec le deuxième demi-support (12B).

2. Machine (1) selon la revendication 1, dans laquelle, lorsque le commutateur (I) est ouvert, au moins une fonction de la machine de moulin à café est inhibée.

3. Machine (1) selon la revendication 2, dans laquelle, lorsque le commutateur (I) est ouvert, ledit moteur n'est pas alimenté.

4. Machine (1) selon l'une quelconque des revendications précédentes, dans lequel le premier demi-support (12A) et le deuxième demi-support (12B) sont séparés par une fente (18) et comprennent une anse (16) pour le corps (21) du porte-filtre (20).

5. Machine (1) selon la revendication 4, dans laquelle le premier demi-support (12A) et le deuxième demi-support (12B) définissent un plan de support.

6. Machine (1) selon l'une quelconque des revendications 1 à 3, dans laquelle le premier demi-support (12A) et le deuxième demi-support (12B) sont configurés pour mettre en prise le porte-filtre (20) en correspondance avec les ailettes (221) faisant saillie depuis le corps (22) du porte-filtre (20).

7. Machine (1) selon l'une quelconque des revendications précédentes, dans laquelle le premier demi-support (12A) et le deuxième demi-support (12B) sont reliés à un panneau (C) par l'intermédiaire de câbles respectifs (14A, 14B).

8. Machine (1) selon l'une quelconque des revendications précédentes, comprenant en outre un support de manche supplémentaire (19) pour soutenir le manche (21) du porte-filtre (20).

9. Machine (1) selon l'une quelconque des revendications précédentes, comprenant en outre des crochets (15A, 15B) coopérant avec les demi-supports (12A, 12B) pour maintenir le filtre (23) et/ou le porte-filtre (20) dans une position prédéterminée.

10. Machine selon la revendication 9, dans laquelle lesdits crochets (15A, 15B) sont sensiblement en forme de L inversé.

11. Machine selon la revendication 9 ou 10, dans laquelle lesdits crochets (15A, 15B) sont au moins partiellement d'un matériau électriquement conducteur.

12. Procédé de détection de la présence d'un filtre (23) ou d'un porte-filtre (20) lorsqu'il est dans une position définie dans une machine de moulin à café ou dans une machine pour préparer du café espresso ou dans une machine pour peser une dose de café ou dans une machine pour presser une dose de café moulu dans un porte-filtre, comprenant : la fourniture d'un dispositif (10) pour détecter un filtre (23) ou un porte-filtre (20) comprenant un commutateur normalement ouvert (I) comprenant un premier demi-support (12A) pour le filtre (23) et/ou le porte-filtre (20) et un deuxième demi-support (12B) pour le filtre (23) et/ou le porte-filtre (20), **caractérisé par** la fermeture du commutateur (I) par création d'un contact électrique entre ledit filtre (23) et/ou porte-filtre (20), ledit premier demi-support (12A) et ledit deuxième demi-support (12B).

13. Procédé selon la revendication 12, dans lequel, lorsque le commutateur (I) est ouvert, au moins une fonction de la machine de moulin à café est inhibée.

14. Procédé selon la revendication 13, dans lequel, lorsque le commutateur (I) est ouvert, le moteur n'est pas alimenté.

15. Procédé selon la revendication 13 ou 14, dans lequel un seuil de temps est défini entre le temps durant lequel le circuit est fermé par le filtre et/ou porte-filtre et le temps durant lequel la fonctionnalité de la machine de moulin à café est inhibée.
